# EUROPÄISCHE PATENTANMELDUNG

(11) **EP 0 686 467 A1**
(43) Veröffentlichungstag der Anmeldung: **13.12.1995**
(21) Anmeldenummer: 95108170.2
(22) Anmeldetag: 29.05.1995
(51) Int. Cl.: B29B 7/76

(54) **Verfahren zur Steuerung der Zellenzahl in Polyurethan-Schaumstoffen**

(30) Priorität: 09.06.1994 DE 4420168
(71) Anmelder: MASCHINENFABRIK HENNECKE GmbH, D-51379 Leverkusen (DE)
(72) Erfinder: Sulzbach, Hans-Michael, D-53639 Königswinter (DE); Raffel, Reiner, D-53721 Siegburg (DE); Steilen, Herbert, D-53639 Königswinter (DE)
(74) Vertreter: Drope, Rüdiger, Dr.

(57) **Zusammenfassung**

Ein Verfahren und eine Vorrichtung zur Herstellung von Polyurethan-Schaum mit geregelter Zellenzahl, bei denen die Dispergierung von Gas (6) in einer der Komponenten Polyol oder Isocyanat in einer Dispergiervorrichtung (5) zwischen Mischkopf (1) und Dosierpumpe (3) für die jeweilige Komponente erfolgt.

## Beschreibung

Die vorliegende Erfindung betrifft ein Verfahren zur Steuerung der Zellenzahl in Polyurethan-Schaumstoffen, insbesondere bei Einsatz von Niederdruck-Mischköpfen bei der kontinuierlichen Herstellung von Polyurethan-Blockweichschaum.

Bei der PUR-Blockweichschaumherstellung wird der Schaum bekanntlich durch Treibgas, in der Regel Kohlendioxyd, welches sich aus der Reaktion zwischen Isocyanat und Wasser bildet, erzeugt. Damit eine homogene Zellstruktur entsteht, ist es erforderlich, in der Reaktionsmischung aus Isocyanat-Komponente und Polyolkomponente Gasblasenkeime zur Verfügung zu stellen. Die Qualität des erzeugten Schaumes, d.h. die Gleichmäßigkeit der Schaumstruktur, hängt dabei weitgehend von der Gleichmaßigkeit der vor dem Verschäumen erzeugten Blasenkeime ab. Insbesondere wird die Anzahl der Zellen im Schaum sowie deren Größe durch die Anzahl der bereitgestellten Blasenkeime bestimmt. Wird nur eine geringe Anzahl von Blasenkeimen zur Verfügung gestellt, entsteht ein Schaum mit entsprechend wenigen aber großen Zellen. Wird eine große Anzahl von Blasenkeimen zur Verfügung gestellt, entsteht ein Schaum mit - auf die Volumeneinheit bezogen - vielen, aber kleinen Zellen.

Zur Steuerung der Zellenzahl wurde im Zusammenhang mit Hochdruckmischköpfen bereits vorgeschlagen, die Zellenzahl durch Steuerung des gelösten Gasgehaltes (insbesondere Luft) in einer Komponente, der Isocyanat-Komponente, zu steuern. Die gelöste Luft wird bei der Injektion der Isocyanat-Komponente in dem Mischkopf in Form feiner Blasenkeime freigesetzt (siehe EP-A-565 974). Die Einstellung eines definierten gelösten Luftgehaltes im Isocyanat ist jedoch aufwendig. Gemäß EP-A-565 974 wird vorgeschlagen, den Luftaustausch mit dem Isocyanat in einer Zentrifuge, in der eine große Flüssigkeitsoberfläche des Isocyanats erzeugt wird, in Abhängigkeit von dem in der Zentrifuge herrschenden Luftdruck durchzuführen.

Nach anderen Vorschlägen (DE-A 39 20 994, US-A 49 33 115 und EP-A 239 720) erfolgt die Gasbeladung in speziellen Gasbeladungseinrichtungen, in denen jeweils ein Teilstrom der jeweiligen Komponente aus einem Vorratsbehälter mit Gas beladen wird und der Teilstrom zum Vorratsbehälter zurückgeführt wird. Die Beschickung des Mischkopfes erfolgt aus dem Vorratsbehälter mittels Dosierpumpen. Nachteilig bei diesem Verfahren ist, daß die Gasbeladung auf der Saugseite der Dosierpumpe erfolgt. Dies führt einerseits zu erheblichen Dosierproblemen und andererseits zur Schädigung der Dispersion, indem es beim Durchgang durch die Pumpe zur Agglomeration von Blasenkeimen kommt. Ferner erfordern die genannten Verfahren einen erheblichen Aufwand zur Steuerung des Gasgehaltes in der Emulsion.

Erfindungsgemäß wird nun vorgeschlagen, die Gasdispergiervorrichtung zwischen Dosierpumpe und Mischkopfeinlaß für die Polyolkomponente vorzusehen, wobei die Dispergiervorrichtung im wesentlichen drucklos betrieben wird. Dabei soll unter "drucklos" ein leicht erhöhter Druck in der Größenordnung von 2 bis 5, vorzugsweise bis 3, bar verstanden werden, der erforderlich ist, um den Strömungswiderstand der Zuleitung von der Dispergiervorrichtung zum Mischkopfeinlaß und den Mischkammerdruck von ca. 1 bar zu überwinden.

Vorzugsweise wird ein dynamischer Mischer als Dispergiereinrichtung eingesetzt, der mit hoher Drehzahl betrieben wird, so daß eine effektive Vermischung der dosiert zugeführten Polyolmengen und des dosiert zugeführten Gases erfolgt und wobei hohe Scherkräfte auftreten, so daß eine effektive Zerteilung der Gasblasen erfolgt. Erfindungsgemäß bevorzugt sollen die Gasblasen der erzeugten Dispersion einen mittleren Durchmesser von 40 bis 100 µ aufweisen.

Es wurde gefunden, daß bereits ein einfacher Rührbehälter als Dispergierapparat ausreichend ist, wobei der Rührer mit hoher Drehzahl betrieben wird, so daß die im Rührbehälter befindliche Dispersion unter Ausbildung einer Trombe im gesamten Behältervolumen umgewälzt wird, ohne daß sich im Kopf des Rührbehälters ein Gaspolster ausbilden kann. Bei Verwendung nur eines Rührblattes wird dieses vorzugsweise im Boden des Rührbehälters angeordnet. Der Auslaß für die Polyoldispersion befindet sich vorzugsweise im oberen Bereich des zylindrischen Teils des Rührbehältermantels, d.h. im Bereich der Umwälzströmung mit Aufwärtskomponente. Die Dimension des Rührbehälters wird vorzugsweise so bemessen, daß eine Verweilzeit des Polyols im Rührbehälter von 20 bis 40 sec. resultiert. Kürzere Verweilzeiten sind gegebenenfalls möglich, wenn entsprechend aufwendigere Dispergiergeräte eingesetzt werden. Längere Verweilzeiten führen im allgemeinen nicht zu einer Verbesserung der Polyoldispersion.

Die Steuerung der Zellenzahl des Polyurethan-Schaums erfolgt nun dadurch, daß die Gaszufuhr zum Dispergierapparat geregelt wird. Insbesondere führt eine Regelung der Gaszufuhr im Bereich zwischen 0,05 und 2 Vol.-% (Normalbedingungen) bezogen auf die Polyolzufuhr zu einer Variation der Zellenzahl im Polyurethanschaum zwischen 6 und 35 Zellen / cm.

Als zu dispergierendes Gas kann Luft oder Stickstoff, vorzugsweise Luft eingesetzt werden. Obwohl das Lösungsvermögen üblicher Polyole für Luft bzw. Stickstoff unter Normalbedingungen bei etwa 10 Vol.-% liegt, d.h. eine Größenordnung über der zu dispergierenden Gasmenge, würde ein Einfluß auf die Zellenzahl durch den Sättigungsgrad des eingesetzten Polyols an Luft bzw. Stickstoff nicht beobachtet. Offenbar erfolgt die Dispergierung des Polyols und die Zuführung zum Mischkopf innerhalb so kurzer Zeiträume, daß ein merklicher Phasenübergang des Gases nicht stattfindet, vorzugsweise innerhalb 10 bis 80 sec, besonders bevorzugt innerhalb 20 bis 50 sec.

Erfindungsgemäß ist es ferner möglich, nur einen Teilstrom des eingesetzten Polyols der Dispergiervorrichtung zuzuführen und einen entsprechend höheren Volumen-Prozentsatz Gas im Polyol zu dispergieren und die Hauptmenge des Polyols mit der Polyoldispersion im Mischkopf zu vermischen. Entscheidend für die Zellenzahl im Polyurethan-Schaum ist die dispergierte Gasmenge, bezogen auf die Gesamtmenge an eingesetztem Polyol.

Erfindungsgemäß werden die Dosierprobleme, die bei der Dosierung von Polyol/Gas-Dispersionen auftreten, sicher vermieden. Insbesondere sind keine aufwendigen Meßvorrichtungen zur Messung des Gasgehaltes im Polyol erforderlich. Ferner erlaubt die kurze Verweilzeit zwischen Herstellung der Dispersion und deren Einführung in den Mischkopf eine sichere Steuerung der Zellenzahl ohne Berücksichtigung einer eventuellen Gassättigung bzw. Untersättigung des eingesetzten Polyols.

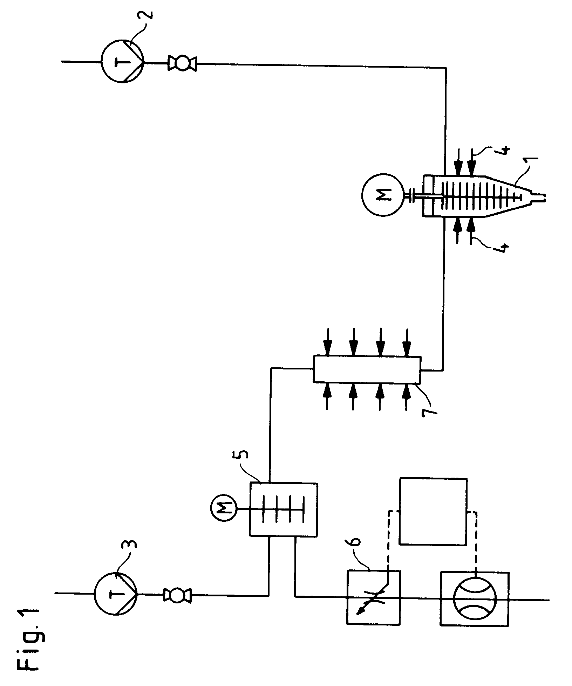

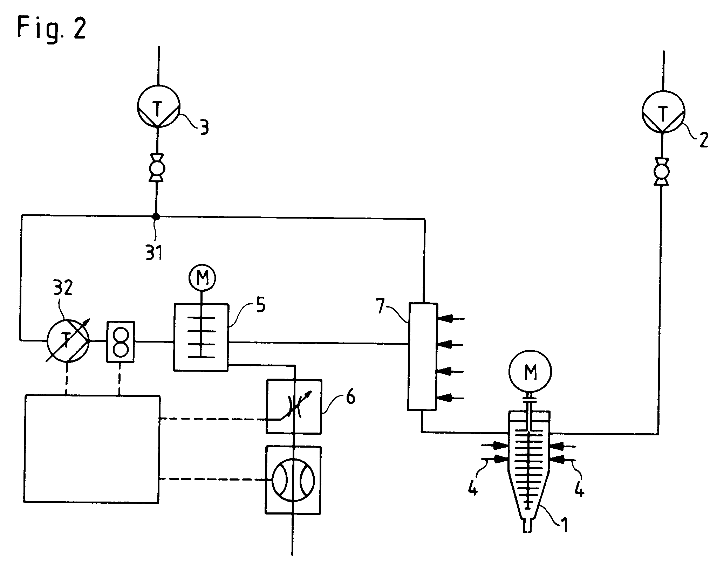

Die Erfindung wird anhand der nachfolgenden Fig. 1 und 2 näher erläutert:

Fig. 1 zeigt einen Niederdruckmischkopf, z.B. einen Friktionsmischer, z.B. gemäß Bild 4.53 auf Seite 177 des Kunststoff-Handbuchs, Band 7, Herausgeber Becker/Braun (1993). Dem Mischkopf 1 werden über Dosierpumpe 2 Isocyanat und über Dosierpume 3 Polyol entsprechend der erforderlichen Isocyanat-Kennzahl zugeführt. Ferner können, durch die Pfeile 4 angedeutet, weitere Additive zugeführt werden. Zwischen Mischkopf 4 und Dosierpumpe 3 ist ein Dispergiergerät 5 vorgesehen, das von der Polyol-Komponente durchströmt wird. Ferner wird über ein geregeltes Ventil 6 Gas zur Steuerung der Zellenzahl des Polyurethan-Schaumstoffs zugeführt. Zwischen Dispergiervorrichtung 5 und Mischkopf 1 können ferner Mittel 7 zur weiteren Zugabe von Additiven, Füllstoffen und ähnlichem vorgesehen sein.

In der Ausführungsform gemäß Fig. 2 wird lediglich ein Teilstrom des Polyols zur Dispergierung eingesetzt. Gleiche Bezugszeichen bezeichnen gleiche Elemente wie in Fig. 1. Zur Erzeugung des Teilstroms ist eine Verzweigung 31 hinter der Dosierpumpe 3 vorgesehen, ferner in dem zur Dispergiervorrichtung 5 führenden Teilstrom eine Teilstrompumpe 32.

### Beispiele

### Beispiel 1

In einer Versuchsvorrichtung gemäß Fig. 1 wird ein übliches Polyurethan-Blockschaumsystem verschäumt. Über Dosierpumpe 3 werden 60 l / min Polyol der Dispergiervorrichtung 5, die aus einem Einflügelrührbehälter mit einem Volumen von 30 l besteht, kontinuierlich zugeführt. Ferner werden über das geregelte Ventil 6 definierte Luftmengen zugeführt. Über Dosierpumpe 2 werden 18 l/ min Isocyanat dem Mischkopf 1 zugeführt. In dem erhaltenen Polyurethan-Schaumstoff wird die Zellenzahl pro cm in Abhängigkeit von der zugeführten Luftmenge ausgezählt. Dabei wird folgender Zusammenhang ermittelt:

| Luft l / min | Zellen / cm |
|---|---|
| 0,06 | 9 |
| 0,12 | 12 |
| 0,2 | 15 |
| 0,6 | 25 |

### Beispiel 2

Einer Vorrichtung gemäß Fig. 2 werden über Pumpe 3 300 l / min Polyol zugeführt. Mittels Pumpe 32 wird ein Teilstrom von 20 l/ min dem Rührbehälter mit einem Volumen von 10 l zugeführt. Ferner werden in dem Rührbehälter über das geregelte Ventil 6 definierte Luftmengen zugeführt. Über Pumpe 2 werden dem Mischkopf 1 91 l / min Isocyanat-Komponente zugeführt. Es wurde folgender Zusammenhang zwischen der Anzahl der Zellen im Schaumstoff und der zugeführten Luftmenge ermittelt:

| Luft l / min | Zellen / cm |
|---|---|
| 0,3 | 9 |
| 0,6 | 12 |
| 1,0 | 14 |
| 3,0 | 23 |

## Patentansprüche

1. Verfahren zur Steuerung der Zellenzahl bei der Produktion von Polyurethan-Schaumstoffen, wobei mindestens ein Polyol mit mindestens einem Isocyanat unter Zugabe von Treibmitteln und weiteren Additiven vermischt werden und wobei mindestens in einer der Komponenten durch Dispergierung von Gas Blasenkeime erzeugt werden, dadurch gekennzeichnet, daß die Dispergierung von Gas in der Komponente zwischen Dosierpumpe und Mischkopf erfolgt.

2. Verfahren nach Anspruch 1, dadurch gekennzeichnet, daß die Polyol-Komponente mit Blasenkeimen versehen wird.

3. Verfahren nach Anspruch 1 oder 2, dadurch gekennzeichnet, daß die Erzeugung der Blasenkeime im wesentlichen drucklos erfolgt.

4. Verfahren nach einem der Ansprüche 1 bis 3, dadurch gekennzeichnet, daß die Erzeugung der Blasenkeime innerhalb eines Zeitraumes von 10 bis 80 sec. vor der Einleitung des Polyols in dem Mischkopf erfolgt.

5. Verfahren nach einem der Ansprüche 1 bis 4, dadurch gekennzeichnet, daß die Zellenzahl durch die relative Menge des als Blasenkeime dispergierten Gases geregelt wird.

6. Vorrichtung zur Herstellung von Polyurethan-Schaum mit geregelter Zellenzahl, enthaltend einen Niederdruckmischkopf, Pumpen für die dosierte Zufuhr von Isocyanatkomponente und Polyol-Komponente, sowie eine zwischen Mischkopf und mindestens einer der Dosierpumpen angeordneten Dispergiervorrichtung sowie Mitteln zur dosierten Zufuhr von Gas zu der Dispergiervorrichtung.
